# FASCICULE DE BREVET EUROPEEN

(11) **EP 4 567 746 B1**
(45) Date de publication et mention de la délivrance du brevet: **14.10.2026**
(21) Numéro de dépôt: 24216032.3
(22) Date de dépôt: 28.11.2024
(51) Int. Cl.: G06V 10/82, G06V 20/52

(54) **PROCEDE DE LOCALISATION D' AU MOINS UNE ANOMALIE DANS UNE DONNEE SPATIO-TEMPORELLE**
VERFAHREN ZUR LOKALISIERUNG MINDESTENS EINER ANOMALIE IN EINEM RAUM-ZEIT-DATENFORMAT
METHOD FOR LOCATING AT LEAST ONE ANOMALY IN SPATIO-TEMPORAL DATA

(30) Priorité: 05.12.2023 FR 2313545
(43) Date de publication de la demande: 11.06.2025
(73) Titulaire: Airbus DS SLC, 78990 Elancourt (FR)
(72) Inventeur: Djeachandrane, Abhishek, 60800 Crépy-en-Valois (FR); Delmas, Serge, 78690 Saint-Rémy- l'Honoré (FR); Dubois, Alain, 78470 Saint-Rémy lès Chevreuse (FR); Mellouk, Abdelhamid, 91400 Orsay (FR)
(74) Mandataire: Cabinet Camus Lebkiri

(56) Documents cités:
- DJEACHANDRANE ABHISHEK ET AL: "Deep RL-based Abnormal Behavior Detection and Prevention in Network Video Surveillance", GLOBECOM 2022 - 2022 IEEE GLOBAL COMMUNICATIONS CONFERENCE, IEEE, 4 December 2022 (2022-12-04), pages 3635 - 3640, XP034269048, DOI: 10.1109/GLOBECOM48099.2022.10001471
- MÜLLER ROBERT ET AL: "Towards Anomaly Detection in Reinforcement Learning", INTERNATIONAL CONFERENCE ON AUTONOMOUS AGENTS AND MULTIAGENT SYSTEMS (AAMAS), 9 May 2022 (2022-05-09), pages 1799 - 1803, XP093188949, ISBN: 978-1-4503-9213-6
- SUN ZENAN ET AL: "Reinforced Contrastive Graph Neural Networks (RCGNN) for Anomaly Detection", 2022 IEEE INTERNATIONAL PERFORMANCE, COMPUTING, AND COMMUNICATIONS CONFERENCE (IPCCC), IEEE, 11 November 2022 (2022-11-11), pages 65 - 72, XP034301072, DOI: 10.1109/IPCCC55026.2022.9894334
- DOSHI KEVAL ET AL: "Towards Interpretable Video Anomaly Detection", 2023 IEEE/CVF WINTER CONFERENCE ON APPLICATIONS OF COMPUTER VISION (WACV), IEEE, 2 January 2023 (2023-01-02), pages 2654 - 2663, XP034290735, DOI: 10.1109/WACV56688.2023.00268

## Description

### DOMAINE TECHNIQUE DE L'INVENTION

Le domaine technique de l'invention est celui de la localisation d'anomalies et en particulier de la localisation d'anomalies dans une donnée spatio-temporelle.

La présente invention concerne un procédé de localisation d'au moins une anomalie dans une donnée spatio-temporelle.

### ARRIERE-PLAN TECHNOLOGIQUE DE L'INVENTION

Des données spatio-temporelles sont des données caractérisées par des attributs spatiaux tels qu'une distance et/ou une direction et/ou une position, et des attributs temporels, tels qu'un nombre d'occurrences d'événements et/ou des changements dans le temps et/ou une durée. En d'autres termes, des données spatio-temporelles sont des données qui subissent un changement dans le temps et dans l'espace. Ces données spatio-temporelles sont, dans le cadre de la présente demande, générées par la mesure d'un environnement réel. Par exemple, une vidéo provenant d'un système de vidéo-surveillance est une donnée spatio-temporelle. D'autres données spatio-temporelles compatibles avec l'invention sont, par exemple, des données issues d'une mesure de vibration et/ou de chaleur et/ou d'une force exercée sur un système, tel qu'un moteur ou une aile d'avion.

Localiser une anomalie dans une donnée spatio-temporelle consiste à identifier l'éventuelle présence d'une irrégularité au sein de cette donnée spatio-temporelle. Les termes « localiser une anomalie » comprennent aussi le cas dans lequel aucune anomalie n'a été identifiée dans la donnée spatio-temporelle. La localisation peut être temporelle et/ou spatiale au sein de cette donnée. Une localisation temporelle d'une anomalie consiste à identifier le moment auquel une éventuelle anomalie est présente dans la donnée spatio-temporelle. Par exemple, dans une vidéo capturée par un système de vidéo-surveillance d'une durée d'une minute, une anomalie peut être détectée à la 3^{ème} ou à la 20^{ème} seconde de la vidéo. Une localisation spatiale d'une anomalie consiste à identifier l'emplacement de la au moins une anomalie, i.e., de la ou des anomalies, dans l'ensemble des données. Par exemple, dans une vidéo capturée par un système de vidéo-surveillance multi-caméras, une anomalie peut être détectée sur la vidéo provenant d'une seule des caméras du système de vidéo-surveillance. Localiser une anomalie est donc différent d'identifier la présence ou l'absence d'une anomalie.

Le terme « anomalie » décrit, dans la présente demande, toute irrégularité pouvant être détectée dans une donnée spatio-temporelle. Dans l'exemple d'une donnée spatio-temporelle provenant d'un système de vidéo-surveillance, une anomalie peut être un ou plusieurs événements parmi : un acte de vandalisme, une explosion, une émeute, un accident, une personne effectuant une course ou lançant un objet. La ou les anomalies à localiser peuvent par exemple être prédéterminées.

Différents procédés de l'art antérieur permettent de localiser une anomalie dans une donnée spatio-temporelle. Il est par exemple connu d'utiliser une méthode d'apprentissage automatique basée sur un réseau de neurones. Ainsi, le réseau de neurones est préalablement entraîné sur un jeu de données spatio-temporelles annotées avant d'être utilisé en phase de production. L'annotation consiste à ajouter l'information de la localisation d'une anomalie pour chaque donnée spatio-temporelle. Les anomalies sont donc prédéterminées avant le début de la phase d'entraînement du réseau de neurones et chaque occurrence d'une anomalie est localisée pour chaque donnée du jeu de données spatio-temporelles utilisé pour l'entraînement. La phase de production est la phase durant laquelle, un réseau de neurones préalablement entraîné, est utilisé pour réaliser une tâche applicative, par exemple dans le cas de l'invention localiser une anomalie dans une donnée spatio-temporelle non comprise dans le jeu de données spatio-temporelles utilisé pour l'entraînement. Le document DJEACHANDRANE ABHISHEK ET AL: "Deep RL-based Abnormal Behavior Detection and Prevention in Network Video Surveillance",GLOBECOM 2022 - 2022 IEEE GLOBAL COMMUNICATIONS CONFERENCE, IEEE, 4 décembre 2022 (2022-12-04), pages 3635-3640, DOI: 10.1109/GLOBECOM48099.2022.10001471 en est un exemple.

Un premier problème lié à l'utilisation des procédés de l'art antérieur est donc la difficulté d'obtenir des jeux de données spatio-temporelles annotées. En effet, annoter un jeu de données spatio-temporelles est une tâche complexe, longue et coûteuse. Il faut noter que ceci est particulièrement vrai lorsque l'annotation concerne la localisation temporelle et/ou spatiale d'au moins une anomalie dans la donnée spatio-temporelle. Ainsi, il est plus aisé d'obtenir un jeu de données spatio-temporelles annotées avec une information de présence et/ou absence d'anomalie.

Un second problème lié à l'utilisation des procédés de l'art antérieur est leur incapacité à apprendre durant la phase de production. Ainsi, dans les procédés de l'art antérieur, le réseau de neurones n'apprend plus en phase de production et ne peut donc continuer à s'améliorer dans la localisation d'anomalies durant cette phase.

Un troisième problème lié à l'utilisation des procédés de l'art antérieur est leur inaptitude à s'adapter à de nouveaux environnements et/ou à identifier de nouveaux types d'anomalies durant la phase de production. Dans un exemple d'une donnée spatio-temporelle qui est une vidéo provenant d'un système de vidéo-surveillance, lorsque la phase de production du réseau de neurones est effectuée dans un nouvel environnement tel qu'un nouvel angle de vue pour la ou les caméras du système de vidéo-surveillance, la capacité du réseau de neurones à localiser une anomalie est réduite. Un « nouvel environnement » signifie ici un environnement non présent dans les données utilisées pour l'entraînement du réseau de neurones. De même, ces procédés de l'art antérieur ne peuvent localiser des types d'anomalies pour lesquels ils n'ont pas été entraînés.

Ainsi il existe un besoin de fournir un procédé de localisation d'une anomalie dans une donnée spatio-temporelle limitant, au moins en partie, les problèmes liés à l'utilisation des procédés de l'art antérieur.

### RESUME DE L'INVENTION

L'invention offre une solution aux problèmes évoqués précédemment, en permettant un apprentissage par renforcement du réseau de neurones durant la phase de production. Ainsi, le réseau de neurones est capable d'apprendre en phase de production à partir de données spatio-temporelles non annotées au préalable. De plus, le procédé selon l'invention permet aussi un apprentissage par similarité du réseau de neurones durant la phase de production. Le réseau de neurones est donc apte à s'adapter rapidement à la localisation d'une anomalie dans un nouvel environnement et/ou à la localisation d'une nouvelle anomalie durant la phase de production.

Un premier aspect de l'invention concerne un procédé, mis en œuvre par ordinateur, de localisation d'au moins une anomalie dans une donnée spatio-temporelle, le procédé comprenant des étapes de :
- Obtention d'une donnée spatio-temporelle,
- Obtention d'un réseau de neurones configuré pour générer une information de localisation d'au moins une anomalie à partir d'une donnée spatio-temporelle,
- Génération, par le réseau de neurones obtenu, de l'information de localisation de la au moins une anomalie en fournissant au réseau de neurones la donnée spatio-temporelle obtenue,
- Obtention d'un score de précision fourni par un utilisateur évaluant une précision de l'information générée de localisation de la au moins une anomalie,
- Apprentissage par renforcement du réseau de neurones, à partir de l'information générée de localisation de la au moins une anomalie et du score de précision, l'apprentissage par renforcement étant effectué à partir d'une première fonction pénalisant une faible valeur du score de précision,
- Apprentissage par similarité du réseau de neurones appris par renforcement, à partir d'un premier ensemble de données spatio-temporelles comprenant la donnée spatio-temporelle obtenue, l'apprentissage par similarité étant effectué à partir d'une seconde fonction à minimiser, la seconde fonction correspondant à une contrainte par paire entre la donnée spatio-temporelle obtenue et au moins une autre donnée spatio-temporelle du premier ensemble des données spatio-temporelles, le premier ensemble de données spatio-temporelles comprenant, pour chaque donnée spatio-temporelle du premier ensemble de données spatio-temporelles, une information de vérité terrain de localisation de la au moins une anomalie obtenue à partir de l'information générée de localisation de la au moins une anomalie dans la donnée spatio-temporelle et du score de précision.

Grâce à l'invention, il est possible de localiser temporellement et/ou spatialement une anomalie dans une donnée spatio-temporelle. De plus, le procédé devient de plus en plus performant durant la phase de production car le réseau de neurones apprend par renforcement en utilisant un retour utilisateur évaluant la précision de la localisation de la au moins une anomalie fournie par le réseau de neurones. De plus, le réseau de neurones est capable de s'adapter rapidement à un nouvel environnement et/ou à détecter un nouveau type d'anomalie durant la phase de production.

Outre les caractéristiques qui viennent d'être évoquées dans le paragraphe précédent, le procédé selon le premier aspect de l'invention peut présenter une ou plusieurs caractéristiques complémentaires parmi les suivantes, considérées individuellement ou selon toutes les combinaisons techniquement possibles :
- l'apprentissage par renforcement du réseau de neurones comprend une sous-phase d'apprentissage par renforcement basé sur un processus de décision markovien et une sous-phase d'apprentissage multi-instance par renforcement basé sur le problème du bandit manchot,
- la sous-phase d'apprentissage par renforcement basé sur un processus de décision markovien est effectuée à partir d'une troisième fonction renforçant une localisation anticipée de la au moins une anomalie dans la donnée spatio-temporelle,
- la sous-phase d'apprentissage multi instance par renforcement basé sur le problème du bandit manchot est effectuée à partir d'une quatrième fonction renforçant une localisation multiple de la au moins une anomalie dans la donnée spatio-temporelle,
- l'obtention du réseau de neurones comprend un apprentissage initial selon un deuxième aspect de l'invention du réseau de neurones,
- la donnée spatio-temporelle est :
   - Une vidéo, et/ou
   - Un son, et/ou
   - Une donnée issue d'une mesure d'une force et/ou d'une vibration et/ou d'une température et/ou d'une pression et/ou d'une luminosité.

Un deuxième aspect de l'invention concerne un procédé d'apprentissage initial d'un réseau de neurones prenant en entrée une donnée spatio-temporelle et fournissant en sortie une information de localisation d'au moins une anomalie dans ladite donnée spatio-temporelle, le procédé comprenant des étapes de :
- Apprentissage par renforcement du réseau de neurones, à partir d'un second ensemble de données spatio-temporelles faiblement annotées, chaque donnée spatio-temporelle du second ensemble de données spatio-temporelles étant annotée avec une information de vérité terrain de la présence et/ou de l'absence de la au moins une anomalie dans ladite chaque donnée spatio-temporelle, l'apprentissage par renforcement du réseau de neurones étant effectué à partir d'une cinquième fonction pénalisant une différence, pour chaque donnée spatio-temporelle du second ensemble de données spatio-temporelles, entre l'information générée de localisation de la au moins une anomalie pour ladite chaque donnée spatio-temporelle générée par le réseau de neurones et l'information de vérité terrain de ladite chaque donnée spatio-temporelle,
- Génération, à partir du second ensemble des données spatio-temporelles, de sous-ensembles de données spatio-temporelles, chaque sous-ensemble de données spatio-temporelles comprenant au moins une donnée spatio-temporelle avec au moins une anomalie et au moins une donnée spatio-temporelle sans anomalie, et
- Apprentissage par similarité du réseau de neurones, pour chaque donnée spatio-temporelle de chaque sous-ensemble de données spatio-temporelles, l'apprentissage par similarité du réseau de neurones à partir d'une sixième fonction pénalisant une contrainte par paire entre ladite chaque donnée spatio-temporelle et au moins une autre donnée spatio-temporelle dudit chaque sous-ensemble des données spatio-temporelles,

Le procédé selon le deuxième aspect de l'invention dans lequel la donnée spatio-temporelle est :
- Une vidéo, et/ou
- Un son, et/ou
- Une donnée issue d'une mesure d'une force et/ou d'une vibration et/ou d'une température et/ou d'une pression et/ou d'une luminosité.

Un troisième aspect de l'invention concerne un produit programme d'ordinateur comprenant des instructions qui, lorsque le programme est exécuté par un ordinateur, conduisent celui-ci à mettre en œuvre le procédé selon l'invention.

Un quatrième aspect de l'invention concerne un support d'enregistrement lisible par ordinateur comprenant des instructions qui, lorsqu'elles sont exécutées par un ordinateur, conduisent celui-ci à mettre en œuvre le procédé selon l'invention.

Un cinquième aspect de l'invention concerne un système comprenant les moyens adaptés pour exécuter le procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant les étapes d'un exemple du procédé 100 selon l'invention.
- La figure 2 est un schéma synoptique illustrant les sous-étapes d'une étape 170 d'un exemple procédé 100 selon l'invention.
- La figure 3 est une représentation schématique d'un exemple du procédé 100 selon l'invention.
- La figure 4 est un schéma synoptique illustrant les étapes d'un exemple du procédé 200 selon l'invention.

### DESCRIPTION DETAILLEE

Sauf précision contraire, un même élément apparaissant sur des figures différentes présente une référence unique.

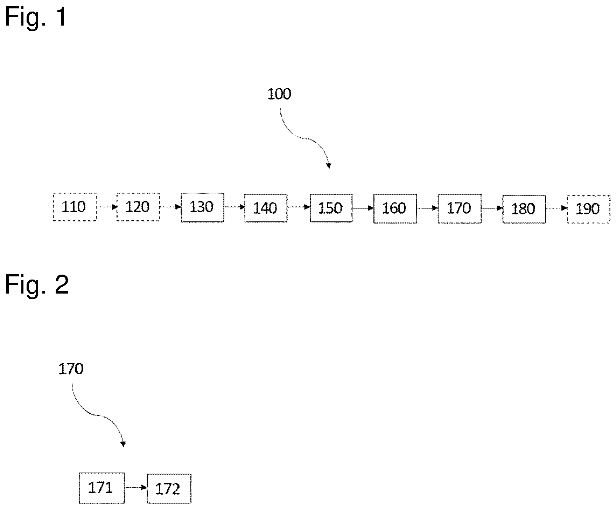

La figure 1 est un schéma synoptique illustrant les étapes d'un exemple du procédé 100 selon l'invention. Les étapes obligatoires de l'exemple du procédé 100 sont indiquées par un rectangle en traits pleins et les étapes facultatives sont indiquées par un rectangle en traits pointillés.

Le procédé 100 est mis en œuvre par ordinateur. Par « mis en œuvre par ordinateur », il est entendu que les étapes, ou pratiquement toutes les étapes, sont exécutées par au moins un ordinateur ou processeur ou tout autre système similaire. Ainsi, des étapes sont réalisées par l'ordinateur, éventuellement de manière entièrement automatique, ou, semi-automatique. Dans des exemples, le déclenchement d'au moins certaines des étapes de ces méthodes peut être effectué par interaction utilisateur-ordinateur. Par exemple, l'étape 160 peut être effectuée par interaction utilisateur-ordinateur. Le niveau d'interaction utilisateur-ordinateur requis peut dépendre du niveau d'automatisme prévu et mis en balance avec la nécessité de mettre en œuvre les souhaits de l'utilisateur. Dans des exemples, ce niveau peut être défini par l'utilisateur et/ou prédéfini.

Un exemple typique d'implémentation par ordinateur d'une méthode consiste à exécuter la méthode avec un système adapté à cet effet. Le système peut comprendre un processeur couplé à une mémoire et une interface utilisateur graphique (GUI), la mémoire ayant enregistré dessus un programme informatique comprenant des instructions pour mettre en œuvre le procédé. La mémoire peut également stocker une base de données. La mémoire est tout matériel adapté pour un tel stockage, comprenant éventuellement plusieurs parties physiques distinctes.

Le procédé 100 est un procédé de localisation d'une anomalie dans une donnée spatio-temporelle. Ainsi, le procédé 100 permet non seulement de savoir si une donnée spatio-temporelle comprend une ou plusieurs anomalies mais le procédé 100 permet en outre, lorsque la donnée spatio-temporelle est anormale, de fournir au moins une information spatiale et/ou temporelle permettant de localiser la ou les anomalies dans la donnée spatio-temporelle. Dans la présente demande, une donnée spatio-temporelle est appelée « donnée spatio-temporelle anormale » lorsqu'elle comprend une ou des anomalies et « donnée spatio-temporelle normale » lorsqu'elle ne comprend pas d'anomalie.

Le procédé 100 selon l'invention peut comprendre une première étape 110 optionnelle de division de la donnée spatio-temporelle en segments de donnée, chaque segment étant une partie de la donnée spatio-temporelle. La division de la donnée spatio-temporelle permet d'obtenir des segments contigus temporellement de la donnée spatio-temporelle. Par exemple, une vidéo de 32 secondes divisées en 32 segments peut avoir comme premier segment la 1^{ère} seconde de vidéo, comme second segment la 2^{ème} seconde de la vidéo et comme 32ème segment la 32^{ème} seconde de la vidéo. De manière complémentaire ou alternative, le procédé 100 selon l'invention peut comprendre une seconde étape optionnelle 120 de compression de la donnée spatio-temporelle, ou de chaque segment de la donnée spatio-temporelle, et d'extraction de caractéristiques spatio-temporelles. L'extraction de caractéristiques spatio-temporelles peut donc être effectuée par donnée spatio-temporelle, c'est-à-dire qu'une extraction est effectuée pour chaque donnée spatio-temporelle séparément, ou par segment de donnée, c'est-à-dire qu'une extraction est effectuée pour chaque segment de donnée spatio-temporelle séparément. Cette étape 120 peut être effectuée en utilisant un réseau de neurones convolutif 3D pré-entraîné, noté C3D ou « 3D ConvNet » pour « 3D Convolutional Network » en anglais.

Une troisième étape 130 du procédé 100 comprend l'obtention d'une donnée spatio-temporelle. Le terme « obtention » correspond dans la présente demande à une réception et/ou à une génération et/ou à un calcul. Par exemple, l'étape 130 peut comprendre la réception d'une donnée spatio-temporelle. De manière alternative, L'étape 130 peut comprendre une étape de génération de la donnée spatio-temporelle, par exemple à partir de différentes données temporelles. Par exemple, la génération de la donnée spatio-temporelle peut consister à regrouper différentes données temporelles issues de mesures effectuées par différents appareils de mesures. La donnée spatio-temporelle obtenue peut provenir d'une mesure d'un environnement réel dans lequel une ou des anomalies peuvent survenir. Par exemple, la donnée spatio-temporelle peut provenir d'une mesure effectuée dans une usine et/ou permet de détecter une ou des anomalies concernant la fabrication et/ou la maintenance d'au moins une partie d'un aéronef. Dans un autre exemple, la donnée spatio-temporelle peut provenir d'une mesure effectuée dans un lieu regroupant au moins une personne et/ou permet de détecter une ou des anomalies concernant le comportement et/ou la santé de cette au moins une personne.

Dans un premier exemple la donnée spatio-temporelle est une vidéo. Par exemple une vidéo issue d'un système de vidéo-surveillance comprenant une ou plusieurs caméras. Ainsi, l'ensemble des vidéos des différentes caméras peuvent être synchronisées temporellement et assemblées pour ne former qu'une seule vidéo. Dans un second exemple, la donnée spatio-temporelle est un son. De même que pour la vidéo, le son peut être la superposition de plusieurs prises de sons effectuées par différents appareils de mesures. Dans un troisième exemple, la donnée spatio-temporelle est issue d'une mesure d'une force et/ou d'une vibration et/ou d'une température et/ou d'une pression et/ou d'une luminosité. Dans un quatrième exemple, la donnée spatio-temporelle provient d'un appareil d'électroencéphalographie. L'électroencéphalographie (EEG) est une méthode d'exploration cérébrale qui mesure l'activité électrique du cerveau par des électrodes placées sur le cuir chevelu souvent représentée sous la forme d'un tracé appelé électroencéphalogramme. Ainsi, la localisation spatiale d'au moins une anomalie peut consister à identifier la ou les électrodes, parmi l'ensemble des électrodes utilisées, ayant fourni la sous-partie de la donnée spatio-temporelle dans lequel la au moins une anomalie a été localisée. La localisation temporelle peut consister à identifier le début et la fin de la au moins une anomalie. Dans un cinquième exemple, la donnée spatio-temporelle provient d'une pluralité d'appareils d'électrocardiographie. L'électrocardiographie (ECG) est une représentation graphique de l'activité électrique du cœur. Dans cet exemple, la localisation spatiale d'au moins une anomalie peut consister à identifier le ou les appareils ECG, parmi l'ensemble des appareils utilisés par exemple pour une multitude de patients, ayant fourni la sous-partie de la donnée spatio-temporelle dans lequel la au moins une anomalie a été localisée.

D'une manière plus générale, la donnée spatio-temporelle peut être issue d'une mesure dans l'un des secteurs suivants : aéronautique et/ou naval et/ou défense et/ou civil et/ou automobile et/ou santé et/ou énergie et/ou autoroute et/ou tunnel et/ou bâtiment et/ou transport et/ou parc automobile. Par exemple, le procédé 100 peut permettre la localisation d'anomalies dans un système de navigation et/ou un circuit carburant et/ou un système d'autopilotage et/ou un système de communication et/ou un système d'organes de sécurité et/ou un aiguillage de train et/ou un système de signalisation et/ou des extracteurs de fumées dans un tunnel et/ou un circuit de distribution d'énergie et/ou un système de logistique pour le transport et/ou un système de domotique dans un bâtiment.

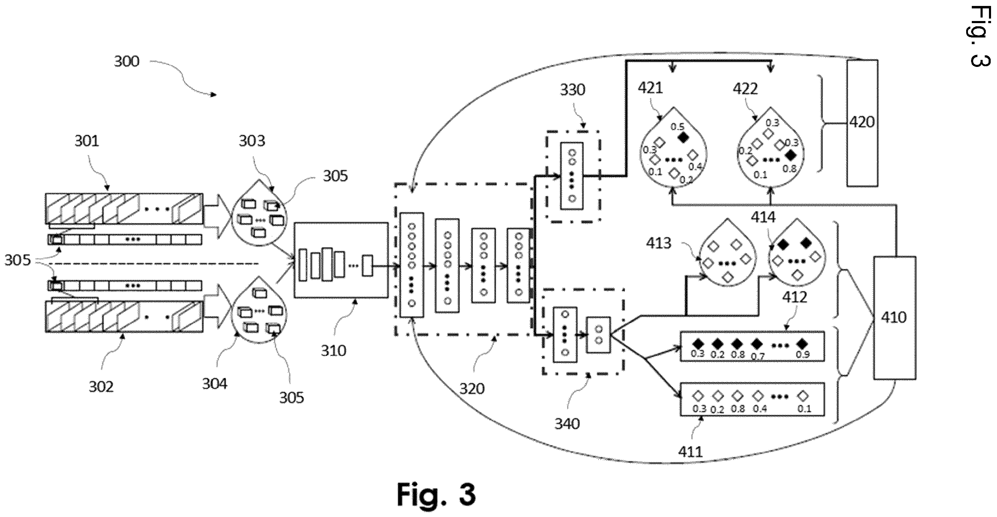

Une quatrième étape 140 du procédé 100 comprend l'obtention d'un réseau de neurones. Le réseau de neurones est configuré pour générer une information de localisation d'une anomalie à partir d'une donnée spatio-temporelle. Le réseau de neurones peut par exemple avoir été préalablement entraîné à localiser une ou plusieurs anomalies. Un réseau de neurones compatible avec l'invention est par exemple un réseau de neurones de type perceptron multicouche ou encore tout réseau de neurones à mémoire tel qu'un réseau de neurones récurrent ou un réseau de neurones utilisé dans le domaine de la vision tel qu'un réseau de neurones convolutif ou encore un réseau de neurones comprenant des mécanismes d'attentions. Par exemple, la figure 3 montre un exemple de réseau de neurones 300 prenant en entrée un ensemble de données spatio-temporelles anormales 301 et un ensemble de données spatio-temporelles normales 302. Chaque donnée spatio-temporelle 301 ou 302 étant divisée en segments de données 305, par exemple 12 segments 305. Ces segments de données 305 sont ensuite regroupés en ensemble de segments anormaux 303 et normaux 304, appelés « bag » en anglais. Ces ensembles de segments 303 et 304 peuvent ensuite être fournis à un élément 310, tel qu'un réseau de neurones convolutif 3D pré-entraîné, adapté pour compresser les données spatio-temporelles et extraire les caractéristiques spatio-temporelles des données spatio-temporelles. L'exemple de réseau de neurones 300 illustré à la figure 3 comprend :
- Un premier groupe 320, illustré sur la figure 3 par un rectangle avec un trait tireté, de quatre couches de réseau de neurones comprenant par exemple respectivement 4096, 512, 256 et 256 neurones, le premier groupe 320 prenant en entrée la donnée spatio-temporelle obtenue à l'étape 130, optionnellement divisée à l'étape 110 et compressée à l'étape 120, et fournissant en sortie une version compressée de la donnée spatio-temporelle,
- Un second groupe 330, illustré sur la figure 3 par un rectangle avec un trait tireté, d'une couche de réseau de neurones comprenant par exemple respectivement 128 neurones, le second groupe 330 prenant en entrée la sortie fournie par le premier groupe 320 et fournissant en sortie une version compressée 422 de données spatio-temporelles normales ou de segments de données spatio-temporelles normaux, c'est-à-dire ne comprenant pas d'anomalie, et une version compressée 421 de données spatio-temporelles anormales ou de segments de données spatio-temporelles anormaux, c'est-à-dire comprenant au moins une anomalie, les versions compressées 421 et 422 comprenant pour chaque donnée spatio-temporelle ou segment un score de localisation d'au moins une anomalie compris entre 0 et 1, et
- Un troisième groupe 340, illustré sur la figure 3 par un rectangle avec un trait tireté, de deux couches de réseau de neurones comprenant par exemple respectivement 32 et 2 neurones, le troisième groupe 340 prenant en entrée la sortie fournie par le premier groupe 320 et fournissant en sortie une valeur de probabilité que la donnée spatio-temporelle, notée 411 pour la donnée spatio-temporelle normale et 412 pour la donnée spatio-temporelle anormale, ou que le segment, noté 411 pour le segment normal et 412 pour le segment anormal, de la donnée spatio-temporelle appartienne à un ensemble, aussi appelé « bag » en anglais, normal 413, c'est-à-dire ne comprenant pas d'anomalie, ou à un ensemble, aussi appelé « bag » en anglais, anormal 414, c'est-à-dire comprenant au moins une anomalie. De plus, dans un exemple compatible avec les exemples précédents, un ensemble est considéré comme anormal s'il comprend au moins deux segments anormaux ou au moins deux données spatio-temporelles anormales.

Une cinquième étape 150 du procédé 100 comprend la génération par le réseau de neurones de l'information de localisation de la au moins une anomalie. Cette information est générée en fournissant au réseau de neurones la donnée spatio-temporelle obtenue à l'étape 130. Ainsi, à la fin de l'étape 150, il est possible d'afficher et/ou d'envoyer cette information de localisation de la au moins une anomalie afin que cette information soit reçue ou visualisée par un utilisateur. Une étape optionnelle d'affichage ou d'envoi de l'information de localisation de la au moins une anomalie peut donc être comprise dans le procédé 100. Cette étape optionnelle peut permettre à un utilisateur de visualiser cette information de localisation de manière isolée de la donnée spatio-temporelle ou de manière conjointe avec la donnée spatio-temporelle. Par exemple, l'information de localisation peut consister à superposer une indication visuelle sur une partie d'une vidéo, l'indication visuelle permettant d'identifier spatialement au moins une anomalie.

Une sixième étape 160 du procédé 100 comprend l'obtention d'un score de précision fourni par un utilisateur. Le score de précision évalue une précision de l'information générée de localisation de la au moins une anomalie. Par exemple, le score de précision peut consister à une valeur numérique comprise entre 0 et 1. Le score de précision peut par exemple être 0 lorsque l'utilisateur considère l'information générée de localisation de la au moins une anomalie n'est pas précise. Par exemple, un score de précision d'une valeur de 0 peut être fourni par un utilisateur lorsque :
- le procédé 100 n'a pas localisé au moins une anomalie dans une donnée spatio-temporelle comprenant au moins une anomalie, et/ou
- le procédé 100 a localisé au moins une anomalie dans une donnée spatio-temporelle ne comprenant pas d'anomalie.

Un score de précision d'une valeur de 1 peut être fourni par un utilisateur lorsque :
- le procédé 100 a localisé au moins une anomalie dans une donnée spatio-temporelle comprenant au moins une anomalie, et/ou
- le procédé 100 n'a pas localisé d'anomalie dans une donnée spatio-temporelle ne comprenant pas d'anomalie.

Des scores compris entre 0 et 1 sont aussi possibles par exemple :
- lorsque le procédé 100 n'a localisé qu'une partie des anomalies comprise dans la donnée spatio-temporelle,
- lorsque la localisation d'au moins une anomalie comprise dans la donnée spatio-temporelle n'est pas optimale, c'est-à-dire que l'information de localisation spatiale et/ou temporelle n'est pas suffisamment précise.

Ce score de précision peut être fourni par l'utilisateur par n'importe quel moyen permettant à l'ordinateur d'obtenir ce score. Par exemple, l'utilisateur peut cliquer sur un bouton d'une interface graphique affichée par l'ordinateur mettant en œuvre le procédé 100 ou connecté à l'ordinateur mettant en œuvre le procédé 100. L'utilisateur peut aussi indiquer le score à l'aide d'un clavier de l'ordinateur mettant en œuvre le procédé 100 ou d'un clavier d'un ordinateur connecté à l'ordinateur mettant en œuvre le procédé 100. Il est aussi possible de déduire le score de précision à partir d'une action de l'utilisateur. Par exemple, si l'information de localisation générée à l'étape 130 indique qu'aucune anomalie n'a été localisée dans la donnée spatio-temporelle mais que l'utilisateur effectue une action listée comme une action permettant de résoudre une anomalie, alors le score de précision peut automatiquement être calculé comme étant 0.

Une septième étape 170 du procédé 100 comprend l'apprentissage par renforcement du réseau de neurones, à partir de l'information générée de localisation de la au moins une anomalie et du score de précision. Ainsi, à partir de l'information générée de localisation de la au moins une anomalie et du score de précision, il est possible d'en déduire une valeur équivalente à une vérité terrain de localisation de la au moins une anomalie dans une donnée spatio-temporelle. Par exemple :
- la donnée spatio-temporelle est, dans l'invention, considérée comme anormale :
   - lorsque l'information générée de localisation de la au moins une anomalie est égale à 1 et que le score de précision est aussi égal à 1, ou
   - lorsque l'information générée de localisation de la au moins une anomalie est égale à 0 et que le score de précision est aussi égal à 0, et
- la donnée spatio-temporelle est, dans l'invention, considérée comme normale :
   - lorsque l'information générée de localisation de la au moins une anomalie est égale à 0 et que le score de précision est égal à 1, ou
   - lorsque l'information générée de localisation de la au moins une anomalie est égale à 1 et que le score de précision est égal à 0.

En apprentissage automatique, l'apprentissage par renforcement consiste, pour un agent autonome, à apprendre les actions à prendre, à partir d'expériences, de façon à optimiser une récompense quantitative au cours du temps. L'agent est plongé au sein d'un environnement et prend ses décisions en fonction de son état courant. En retour, l'environnement procure à l'agent une récompense, qui peut être positive ou négative. L'agent cherche, au travers d'expériences itérées, un comportement décisionnel optimal, qui est une fonction associant à l'état courant l'action à exécuter, en ce sens qu'il maximise la somme des récompenses au cours du temps. Dans le procédé 100, l'apprentissage par renforcement est effectué par optimisation d'une première fonction pénalisant une faible valeur du score de précision. Dit autrement, un score de précision élevé est la récompense, que l'agent, i.e. le réseau de neurones, maximise au cours du temps.

Dans un exemple, la septième étape 170 du procédé 100 comprend deux sous-étapes 171 et 172. La figure 2 est un schéma synoptique illustrant les sous-étapes d'une étape 170 d'un exemple procédé 100 selon l'invention. La sous-étape 171 comprend une sous-phase d'apprentissage par renforcement basé sur un processus de décision markovien, appelé en anglais « Markov Decision Process Reinforcement Learning ». L'apprentissage par renforcement de cette sous-étape 171 est effectué par optimisation d'une troisième fonction renforçant une localisation anticipée temporellement de la au moins une anomalie dans la donnée spatio-temporelle. Ainsi, la troisième fonction maximise une localisation anticipée temporellement de la au moins une anomalie dans une donnée spatio-temporelle anormale et une identification anticipée d'une absence d'anomalie dans une donnée spatio-temporelle normale. Lorsque l'étape 110 a été effectuée, la troisième fonction renforce la localisation de la au moins une anomalie dans le ou les premiers segments de la donnée spatio-temporelle, c'est-à-dire dans le ou les segments correspondant au début de la donnée spatio-temporelle. Lorsque le réseau de neurones est tel qu'illustré à la figure 3, cette information de localisation de la au moins une anomalie peut être fournie par le troisième groupe 340 du réseau de neurones tel que décrit précédemment. Un exemple de troisième fonction nommée *QoP,* pour « quality of prediction » en anglais, est détaillée dans l'équation :
$QoP \left({s}_{t}, {a}_{t}\right) = \left\{\begin{matrix}1 , & if f \left({B}_{n}\right) < 0.5 \\ & or f \left({B}_{p}\right) > = 0.5 \\ 0 , & otherwise\end{matrix}\right.$

Avec :
- 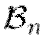 , pour « normal bag » en anglais, c'est-à-dire une donnée spatio-temporelle normale contenant uniquement des segments normaux, et
- 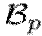 , pour « positive bag » en anglais, c'est-à-dire une donnée spatio-temporelle anormale contenant un ou des segments anormaux.

La troisième fonction *QoP* permet donc d'obtenir une qualité de prédiction sous une forme binaire en fonction de la valeur d'un résultat de prédiction compris entre 0 et 1.

Dans un exemple, compatible avec les exemples précédents, le résultat de prédiction durant cette étape 171 est obtenu par une fonction *O*_{*f*1} pouvant être sous la forme de :
${O}_{f 1} = {max}_{θ} {E}_{πθ} TemporalUtility$

Avec :
- *θ*, correspondant aux paramètres de la politique de prédiction
- Π, correspondant à la politique de prédiction, et
- T, correspondant à la trajectoire c'est-à-dire aux couples S pour « states » en anglais and A pour « actions » en anglais, correspondant respectivement aux données spatio-temporelles et aux scores de prédiction.

Avec la fonction *TemporalUtility* pouvant être sous la forme de :
$TemporalUtility \left(τ\right) = {\sum }_{t = 0}^{T - 1} {γ}^{t} R \left({s}_{t}, {a}_{t}\right)$

Avec :
- γ ∈ [0, 1] et qui est un coefficient d'actualisation qui fait varier la profondeur de l'agent pour l'anticipation,
- *R*(*Sₜ*, *aₜ*)*,* avec R la récompense et t le temps discret, *S*, une donnée spatio-temporelle et (sₜ, sₜ₊₁,..., sₜ₊ₙ) les segments de la donnée spatio-temporelle, et *a* le score de précision pour chaque segment de la donnée spatio-temporelle.

La sous-étape 172 comprend une sous-phase multi instance par renforcement basé sur le problème du bandit manchot, appelé en anglais « Multi Armed Bandit Reinforcement Learning based Multi-Instance Learning ». L'apprentissage par renforcement de cette sous-étape est effectué par optimisation d'une quatrième fonction renforçant une localisation multiple de la au moins une anomalie dans une donnée spatio-temporelle. Ainsi, la quatrième fonction récompense une localisation multiple d'au moins deux anomalies dans une donnée spatio-temporelle anormale et une identification d'une absence d'anomalie dans une donnée spatio-temporelle normale. Lorsque l'étape 110 a été effectuée, la quatrième fonction renforce par exemple la localisation de la au moins une anomalie dans une multitude de segments de la donnée spatio-temporelle. Lorsque le réseau de neurones est tel qu'illustré à la figure 3, cette information de localisation de la au moins une anomalie peut être fournie par le troisième groupe 340 du réseau de neurones tel que décrit précédemment. Un exemple de quatrième fonction nommée *QoP,* pour « quality of prediction » en anglais, est détaillée dans l'équation suivante :
$QoP \left(τ\right) = \left\{\begin{matrix}1 , & if f \left({V}_{n}\right) < 0.5 \\ & or \left({max}_{i ∈ {B}_{p}}f 1\left({V}_{p}\right)>=0.5\right) \\ & and {max}_{i \neq {max}_{1} , i ∈ {B}_{p}} 2 f \left({V}_{p}\right) \left.>=0.5\right) \\ 0 , & otherwise\end{matrix}\right.$

Avec :
- *Vₙ* représentant une donnée spatio-temporelle normale,
- *Vₚ* représentant une donnée spatio-temporelle anormale,
- *βₚ* et *βₙ*, un ensemble de segments *p* ou *n* issus respectivement d'une donnée spatio-temporelle normale et d'une donnée spatio-temporelle anormale, avec *p* ≥ 1 et *n* ≥ 1.

La quatrième fonction *QoP* permet donc d'obtenir une qualité de prédiction sous une forme binaire en fonction de la valeur d'un résultat de prédiction compris entre 0 et 1.

Dans un exemple, compatible avec les exemples précédents, le résultat de prédiction durant cette étape 172 est obtenu par une fonction *O*_{*f*2} pouvant être sous la forme de :
${O}_{f 2} = {max}_{θ} {E}_{πθ} R$

Avec :
- *θ*, les paramètres de la politique de prédiction
- Π, la politique de prédiction, et
- *R,* la récompense cumulée.

Ainsi, dans cette étape 172, la fonction *QoP* renvoie la valeur 1 :
- lorsque, pour une donnée spatio-temporelle normale, l'information de localisation générée est inférieure à 0.5 pour la donnée spatio-temporelle ou pour l'ensemble des segments de la donnée spatio-temporelle normale, et
- lorsque, pour une donnée spatio-temporelle anormale, l'information de localisation générée est supérieure à 0.5 pour la donnée spatio-temporelle ou pour au moins deux segments de la donnée spatio-temporelle normale.

Dans un exemple, compatible avec les exemples précédents, les fonctions *O*_{*f*1} et *O*_{*f*2} peuvent être ajoutées pour obtenir une fonction *O*_{*f*3}*.* Cette fonction *O*_{*f*3} permet donc tenir compte de la cohérence temporelle, grâce à la fonction *O*_{*f*1}, et de la cohérence spatiale, grâce à la fonction *O*_{*f*2}, lors de la localisation de la au moins une anomalie dans une donnée spatio-temporelle. L'utilisation de cette fonction *O*_{*f*3} est par exemple représentée sur la figure 3 par l'entité 410. La fonction *O*_{*f*3} peut donc être obtenue avec l'équation suivante :
${O}_{f 3} = {O}_{f 1} + {O}_{f 2}$

Une huitième étape 180 du procédé 100 comprend l'apprentissage par similarité du réseau de neurones préalablement appris par renforcement à l'étape 170. L'apprentissage par similarité, aussi appelé apprentissage de métriques, permet de mesurer le degré de parenté de deux éléments d'un même ensemble. L'idée générale de l'apprentissage par similarité est d'apprendre des métriques permettant de contenir les données d'une même classe ensemble et de dissocier les données différentes. Le but est donc de minimiser la contrainte par paire. Contrairement à l'apprentissage supervisé classique, qui annote chaque instance avec un label de classe, une contrainte par paire est donnée pour l'ensemble des données. Elle se répartie en deux ensembles, la contrainte d'équivalence, qui regroupe les paires de données sémantiquement similaires qui doivent être proche avec la métrique apprise, et, la contrainte d'inéquivalence, c'est-à-dire de non-équivalence, qui regroupe les paires de données sémantiquement dissimilaires qui doivent être éloignées les unes des autres. Ensuite, un modèle de régression est utilisé pour estimer la probabilité pour deux données de faire partie de la même classe. Il est possible de noter que cette régression est possible via l'algorithme d'apprentissage par renforcement et que ce score permet de savoir si les données sont similaires ou différentes.

Cette étape 180 peut être effectuée pour chaque nouvelle donnée spatio-temporelle ou uniquement lorsqu'un nombre prédéterminé de données spatio-temporelles ont été utilisées et enregistrées, par exemple utilisées dans les étapes précédentes du procédé 100. Cette étape 180 est effectuée à partir d'un premier ensemble de données spatio-temporelles comprenant la donnée spatio-temporelle obtenue à l'étape 130. Lorsque le réseau de neurones est tel qu'illustré à la figure 3, cette étape 180 peut être effectuée à partir des données fournies en sortie par le second groupe 330 du réseau de neurones tel que décrit précédemment. L'apprentissage par similarité étant effectué par minimisation d'une seconde fonction. Cette seconde fonction tend à optimiser le respect d'une contrainte par paire entre la donnée spatio-temporelle obtenue 130 et au moins une autre donnée spatio-temporelle du premier ensemble des données spatio-temporelles. Chaque donnée spatio-temporelle du premier ensemble de données spatio-temporelles comprend une information de vérité terrain de localisation de la au moins une anomalie obtenue à partir de l'information générée de localisation de la au moins une anomalie dans la donnée spatio-temporelle et du score de précision. Cette information de vérité terrain peut par exemple être obtenue à l'aide de la même manière que la valeur équivalente à la vérité terrain pouvant être obtenue à l'étape 170. Le premier ensemble de données spatio-temporelles peut comprendre des données spatio-temporelles obtenues préalablement au procédé 100. Ces données spatio-temporelles peuvent par exemple être issues d'un jeu de données spatio-temporelles utilisé lors d'un entraînement initial du réseau de neurones. De manière alternative ou complémentaire, le premier ensemble de données spatio-temporelles peut comprendre des données spatio-temporelles obtenues durant le procédé 100, qui correspond à la phase de production du réseau de neurones. Par exemple, le premier ensemble de données spatio-temporelles peut comprendre une partie ou l'ensemble des données enregistrées durant la phase de production du réseau de neurones. Ainsi, à chaque fois qu'une donnée spatio-temporelle est obtenue à l'étape 130, cette donnée peut être enregistrée afin d'être ajoutée dans le premier ensemble de données des itérations suivantes du procédé 100. Dit autrement, à chaque miss en œuvre du procédé 100, la donnée spatio-temporelle peut être ajoutée à la fin de l'étape 180 à un premier ensemble de données spatio-temporelles qui peut être stocké et réutilisé pour les mises en œuvre suivantes du procédé 100. Le nombre de données du premier ensemble de données spatio-temporelles peut donc augmenter au fur et à mesure que le procédé 100 est utilisé en production. De plus, il est aussi possible que les données spatio-temporelles ajoutées au premier ensemble de données spatio-temporelles remplacent des données spatio-temporelles du premier ensemble de données spatio-temporelles afin que la taille du premier ensemble de données spatio-temporelles reste stable. De plus, il est avantageux que le premier ensemble de données spatio-temporelles comprennent des données spatio-temporelles normales et anormales en proportion équivalente ou relativement équivalente. Par exemple, il est avantageux que le premier ensemble de données spatio-temporelles comprennent entre 30% et 70% de données spatio-temporelles normales. Dans un exemple, compatible avec les exemples précédents, une fonction compatible pour l'apprentissage par similarité de l'étape 180 est la suivante :
${max}_{i ∈ {B}_{p}} E \left({V}_{p}^{i}\right) > {max}_{i ∈ {B}_{n}} E \left({V}_{n}^{i}\right)$

Avec :
- ${V}_{p}^{i}$ représentant un segment d'index *i* d'une donnée spatio-temporelle anormale *Vₚ*,
- ${V}_{n}^{i}$ représentant un segment d'index *i* d'une donnée spatio-temporelle normale *Vₙ*,
- *βₚ* et *βₙ*, un ensemble de segments *p* ou *n* issus respectivement d'une donnée spatio-temporelle normale et d'une donnée spatio-temporelle anormale, avec *p* ≥ 1 et *n* ≥ 1, et

Cette fonction permet l'apprentissage de métriques pour le premier ensemble de données spatio-temporelles dans un objectif de localisation d'au moins une anomalie, même lorsque les données spatio-temporelles n'ont pas été annotées par une information de localisation.

Dans un exemple, compatible avec les exemples précédents, une fonction compatible pour l'apprentissage par similarité de l'étape 180 est la suivante :
$E \left(arg{max}_{i ∈ {B}_{p}}f\left({V}_{p}^{i}\right)\right) > E \left(arg{max}_{i ∈ {B}_{p}}f\left({V}_{n}^{i}\right)\right)$

Cette fonction permet notamment d'identifier le segment d'une donnée spatio-temporelle anormale correspondant au score d'anomalie le plus élevé. En effet, le segment ayant le score d'anomalie le plus élevé d'une donnée spatio-temporelle anormale est le plus susceptible d'être la véritable instance positive, c'est-à-dire le segment anormal. Il est possible de noter que, pour une donnée spatio-temporelle normale, le segment ayant le score d'anomalie le plus élevé est celui qui ressemble le plus à un segment anormal mais qui est en fait normal. Ce segment ayant le score d'anomalie le plus élevé dans une donnée normale peut générer une fausse alarme dans la localisation d'anomalies. Ainsi, en utilisant l'apprentissage par similarité, il est possible :
- d'éloigner les segments anormaux, ayant le score d'anomalie le plus élevé, des segments normaux.
- De rapprocher les segments normaux entre eux, notamment les segments normaux ayant le score d'anomalie le plus élevé avec les segments normaux ayant un score d'anomalie moins élevé.

Afin de pouvoir classer les segments par similarité, une fonction de perte par triplet peut être utilisée. Une telle fonction est représentée sur la figure 3 par l'entité 420. Par exemple, une fonction telle que la suivant peut être utilisée :
$L \left(A, P, N\right) = max \left({\left‖A-P\right‖}^{2}-{\left‖A-N\right‖}^{2}+1,0\right)$

Avec :
- A : *E* ( 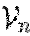 ) or $E \left(arg {min}_{i ∈ {B}_{n}}f\left({V}_{n}^{i}\right)\right)$
- P : $E \left(arg {max}_{i ∈ {B}_{n}}f\left({V}_{n}^{i}\right)\right)$
- N : $E \left(arg {max}_{i ∈ {B}_{p}}f\left({V}_{p}^{i}\right)\right)$

Dans laquelle A est le segment courant pouvant être normal ou anormal, P, pour « positif », est un segment de la même classe que le segment courant A, c'est à dire un segment normal si le segment courant A est normal et un segment anormal si le segment courant A est anormal, et N, pour « négatif », est un segment normal d'une classe différente du segment courant A, c'est à dire un segment anormal si le segment courant A est normal et un segment normal si le segment courant A est anormal.

Une neuvième étape optionnelle 190 du procédé 100 consiste à modifier l'environnement réel dans lequel une ou des anomalies a été localisée à l'aide des précédentes étapes du procédé 100. Par exemple, l'étape 190 peut comprendre les actions suivantes :
- arrêter, de manière automatique ou manuelle une opération de fabrication ou de maintenance d'une pièce manufacturée par exemple sur un aéronef, et/ou
- émettre un signal d'alerte dans l'environnement réel par exemple pour prévenir d'un danger immédiat, et/ou
- évacuer une zone de l'environnement réel, et/ou
- identifier une ou des personnes ayant un comportement à risque ou en danger.

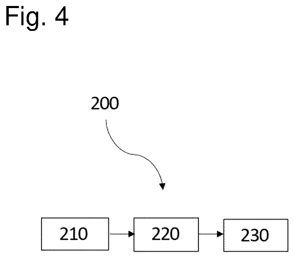

L'invention concerne aussi un procédé d'apprentissage initial du réseau de neurones. La figure 4 est un schéma synoptique illustrant les étapes d'un exemple du procédé 200 d'apprentissage initial du réseau de neurones selon l'invention. Les termes « apprentissage initial » sont utilisés dans la présente demande simplement pour distinguer ce procédé d'apprentissage 200 des phases d'apprentissage du procédé 100. Le procédé 200 est un procédé d'apprentissage d'un réseau de neurones configuré pour prendre en entrée une donnée spatio-temporelle et pour fournir en sortie une information de localisation d'au moins une anomalie dans ladite donnée spatio-temporelle. Par exemple, un réseau de neurones compatible avec le procédé 100 peut être appris par le procédé 200.

Une première étape 210 du procédé 200 comprend un apprentissage par renforcement du réseau de neurones. Cette étape 210 est effectuée à partir d'un second ensemble de données spatio-temporelles préalablement obtenu. Le second ensemble de données spatio-temporelles est un ensemble de données faiblement annotées, c'est-à-dire que chaque donnée spatio-temporelle est annotée uniquement avec une information de présence et/ou d'absence d'au moins une anomalie dans une donnée spatio-temporelle. Cet ensemble de données spatio-temporelles peut par exemple être un ensemble de données spatio-temporelles disponible publiquement tel que l'ensemble de données appelé « UCF Crime ». L'ensemble de données « UCF Crime » a été introduit par Sultani. W, Chen C. et, Mubarak S. dans « Real-world Anomaly Detection in Surveillance Videos », 2018. L'apprentissage par renforcement du réseau de neurones est effectué par optimisation d'une cinquième fonction pénalisant une différence, pour chaque donnée spatio-temporelle du second ensemble de données spatio-temporelles, entre l'information générée de localisation de la au moins une anomalie pour ladite chaque donnée spatio-temporelle générée par le réseau de neurones et l'information de vérité terrain de ladite chaque donnée spatio-temporelle

Cette étape 210 est similaire à l'étape 170 du procédé 100 à l'exception que les données utilisées dans l'étape 210 proviennent d'un second ensemble de données comprenant des données spatio-temporelles faiblement annotées. Ainsi, l'ensemble des exemples fournis pour l'étape 170 sont aussi compatibles avec l'étape 210.

Une seconde étape 220 du procédé 200 comprend une génération, à partir du second ensemble des données spatio-temporelles, de sous-ensembles de données spatio-temporelles. Durant cette étape, le second ensemble des données spatio-temporelles est divisé en plusieurs sous-ensembles de sorte que chaque sous-ensemble de données spatio-temporelles comprend au moins une donnée spatio-temporelle anormale et au moins une donnée spatio-temporelle normale. Par exemple, il est avantageux que chaque sous-ensemble de données spatio-temporelles comprenne entre 30% et 70% de données spatio-temporelles normales.

Une troisième étape 230 du procédé 200 comprend un apprentissage par similarité du réseau de neurones. L'apprentissage par similarité du réseau de neurones est effectué pour chaque donnée spatio-temporelle de chaque sous-ensemble de données spatio-temporelles généré à l'étape 220. L'apprentissage par similarité du réseau est effectué par optimisation d'une sixième fonction pénalisant une contrainte par paire entre ladite chaque donnée spatio-temporelle et au moins une autre donnée spatio-temporelle dudit chaque sous-ensemble des données spatio-temporelles.

Cette étape 230 est similaire à l'étape 190 du procédé 100 à l'exception des données utilisées. Ainsi, l'ensemble des exemples fournis pour l'étape 180 sont aussi compatibles avec l'étape 230.

Dans un exemple, compatible avec les exemples précédents, l'obtention 140 du réseau de neurones comprend le procédé 200 d'apprentissage initial du réseau de neurones.

## Revendications

1. Procédé (100), mis en œuvre par ordinateur, de localisation d'au moins une anomalie dans une donnée spatio-temporelle, le procédé comprenant des étapes de :
- Obtention (130) d'une donnée spatio-temporelle,
- Obtention (140) d'un réseau de neurones configuré pour générer une information de localisation d'au moins une anomalie à partir d'une donnée spatio-temporelle,
- Génération (150), par le réseau de neurones obtenu, de l'information de localisation de la au moins une anomalie en fournissant au réseau de neurones la donnée spatio-temporelle obtenue,
- Obtention (160) d'un score de précision fourni par un utilisateur évaluant une précision de l'information générée de localisation de la au moins une anomalie,
- Apprentissage (170) par renforcement du réseau de neurones, à partir de l'information générée de localisation de la au moins une anomalie et du score de précision, l'apprentissage par renforcement étant effectué à partir d'une première fonction pénalisant une faible valeur du score de précisior
**caractérisé en ce que** le procédé comprend également l'étape de :
- Apprentissage (180) par similarité du réseau de neurones appris par renforcement (170), à partir d'un premier ensemble de données spatio-temporelles comprenant la donnée spatio-temporelle obtenue (130), l'apprentissage par similarité étant effectué à partir d'une seconde fonction à minimiser, la seconde fonction correspondant à une contrainte par paire entre la donnée spatio-temporelle obtenue et au moins une autre donnée spatio-temporelle du premier ensemble des données spatio-temporelles, le premier ensemble de données spatio-temporelles comprenant, pour chaque donnée spatio-temporelle du premier ensemble de données spatio-temporelles, une information de vérité terrain de localisation de la au moins une anomalie obtenue à partir de l'information générée de localisation de la au moins une anomalie dans la donnée spatio-temporelle et du score de précision.

2. Procédé selon la revendication 1 dans lequel l'apprentissage (170) par renforcement du réseau de neurones comprend une sous-phase d'apprentissage (171) par renforcement basé sur un processus de décision markovien et une sous-phase d'apprentissage (172) multi-instance par renforcement basé sur le problème du bandit manchot.

3. Procédé selon la revendication 2 dans lequel la sous-phase d'apprentissage (171) par renforcement basé sur un processus de décision markovien est effectuée à partir d'une troisième fonction renforçant une localisation anticipée de la au moins une anomalie dans la donnée spatio-temporelle.

4. Procédé selon la revendication 2 ou 3 dans lequel la sous-phase d'apprentissage (172) multi instance par renforcement basé sur le problème du bandit manchot est effectuée à partir d'une quatrième fonction renforçant une localisation multiple de la au moins une anomalie dans la donnée spatio-temporelle.

5. Procédé d'apprentissage (200) initial d'un réseau de neurones prenant en entrée une donnée spatio-temporelle et fournissant en sortie une information de localisation d'au moins une anomalie dans ladite donnée spatio-temporelle, le procédé (200) comprenant des étapes de :
- Apprentissage (210) par renforcement du réseau de neurones, à partir d'un second ensemble de données spatio-temporelles faiblement annotées, chaque donnée spatio-temporelle du second ensemble de données spatio-temporelles étant annotée avec une information de vérité terrain de la présence et/ou de l'absence de la au moins une anomalie dans ladite chaque donnée spatio-temporelle, l'apprentissage par renforcement du réseau de neurones étant effectué à partir d'une cinquième fonction pénalisant une différence, pour chaque donnée spatio-temporelle du second ensemble de données spatio-temporelles, entre l'information générée de localisation de la au moins une anomalie pour ladite chaque donnée spatio-temporelle générée par le réseau de neurones et l'information de vérité terrain de ladite chaque donnée spatio-temporelle,
- Génération (220), à partir du second ensemble des données spatio-temporelles, de sous-ensembles de données spatio-temporelles, chaque sous-ensemble de données spatio-temporelles comprenant au moins une donnée spatio-temporelle avec au moins une anomalie et au moins une donnée spatio-temporelle sans anomalie, et
- Apprentissage (230) par similarité du réseau de neurones, pour chaque donnée spatio-temporelle de chaque sous-ensemble de données spatio-temporelles, l'apprentissage par similarité du réseau de neurones à partir d'une sixième fonction pénalisant une contrainte par paire entre ladite chaque donnée spatio-temporelle et au moins une autre donnée spatio-temporelle dudit chaque sous-ensemble des données spatio-temporelles.

6. Procédé selon l'une quelconque des revendications 1 à 4 dans lequel l'obtention (140) du réseau de neurones comprend un apprentissage (200) initial selon la revendication 5 du réseau de neurones.

7. Procédé selon l'une quelconque des revendications précédentes dans lequel la donnée spatio-temporelle est :
- Une vidéo, et/ou
- Un son, et/ou
- Une donnée issue d'une mesure d'une force et/ou d'une vibration et/ou d'une température et/ou d'une pression et/ou d'une luminosité.

8. Produit programme d'ordinateur comprenant des instructions qui, lorsque le programme est exécuté par un ordinateur, conduisent celui-ci à mettre en œuvre le procédé selon l'une quelconque des revendications 1 à 7.

9. Support d'enregistrement lisible par ordinateur comprenant des instructions qui, lorsqu'elles sont exécutées par un ordinateur, conduisent celui-ci à mettre en œuvre le procédé selon l'une quelconque des revendications 1 à 7.

10. Système comprenant les moyens adaptés pour exécuter le procédé selon l'une quelconque des revendications 1 à 7.

## Patentansprüche

1. Computergestütztes Verfahren (100) zur Lokalisierung mindestens einer Anomalie in räumlich-zeitlichen Daten, wobei das Verfahren folgende Schritte umfasst:
- Erhalten (130) von räumlich-zeitlichen Daten,
- Erhalten (140) eines neuronalen Netzes, das so konfiguriert ist, dass es eine Ortsangabe für mindestens eine Anomalie aus räumlich-zeitlichen Daten generiert,
- Erzeugung (150) der Ortsangabe der mindestens einen Anomalie durch das erhaltene neuronale Netz, indem dem neuronalen Netz die erhaltenen räumlich-zeitlichen Daten zugeführt werden,
- Erhalten (160) eines von einem Nutzer bereitgestellten Genauigkeitswerts, der die Genauigkeit der erzeugten Ortsangabe der mindestens einen Anomalie bewertet,
- Verstärkendes Lernen (170) des neuronalen Netzes anhand der erzeugten Ortsangabe zu der mindestens einen Anomalie und des Genauigkeitswerts, wobei das verstärkende Lernen anhand einer ersten Funktion erfolgt, die einen niedrigen Wert des Genauigkeitswerts bestraft,
**dadurch gekennzeichnet, dass** das Verfahren ferner den Schritt umfasst:
- Ähnlichkeitsbasiertes Lernen (180) des durch Verstärkung trainierten neuronalen Netzes (170) anhand einem ersten Satz von räumlich-zeitlichen Daten, der die ermittelten räumlich-zeitlichen Daten (130) umfasst, wobei das ähnlichkeitsbasierte Lernen anhand einer zweiten zu minimierenden Funktion erfolgt und die zweite Funktion einer paarweisen Nebenbedingung zwischen den erhaltenen räumlich-zeitlichen Daten und mindestens einem weiteren räumlich-zeitlichen Datensatz aus dem ersten Satz räumlich-zeitlicher Daten entspricht, wobei der erste Satz räumlich-zeitlicher Daten für jeden räumlich-zeitlichen Datensatz des ersten Satzes räumlich-zeitlicher Daten eine Grundwahrheit zur Lokalisierung der mindestens einen Anomalie umfasst, die aus der generierten Ortsangabe der mindestens einen Anomalie in dem räumlich-zeitlichen Datensatz und dem Genauigkeitswert gewonnen wird.

2. Verfahren nach Anspruch 1, bei dem das verstärkende Lernen (170) des neuronalen Netzes eine auf einem Markov-Entscheidungsprozess basierende Unterphase des verstärkenden Lernens (171) und eine auf dem Einarmigen-Banditen-Problem basierende verstärkende Multi-Instanz-Lernunterphase (172) umfasst.

3. Verfahren nach Anspruch 2, bei dem die auf einem Markov-Entscheidungsprozess basierende Unterphase des verstärkenden Lernens (171) anhand einer dritten Funktion durchgeführt wird, die eine vorausschauende Lokalisierung der mindestens einen Anomalie in den räumlich-zeitlichen Daten verstärkt.

4. Verfahren nach Anspruch 2 oder 3, bei dem die Multi-Instanz-Lernunterphase (172) mittels verstärkendem Lernen auf der Grundlage des Einarmigen-Banditen-Problems anhand einer vierten Funktion durchgeführt wird, die eine mehrfache Lokalisierung der mindestens einen Anomalie in den räumlich-zeitlichen Daten verstärkt.

5. Verfahren zum anfänglichen Lernen (200) eines neuronalen Netzes, das räumlich-zeitliche Daten als Eingabe entgegennimmt und als Ausgabe eine Ortsangabe zu mindestens einer Anomalie in den räumlich-zeitlichen Daten liefert, wobei das Verfahren (200) folgende Schritte umfasst:
- Verstärkendes Lernen (210) des neuronalen Netzes auf der Grundlage eines zweiten, schwach annotierten räumlich-zeitlichen Datensatzes, wobei alle räumlich-zeitliche Daten des zweiten räumlich-zeitlichen Datensatzes mit einer Grundwahrheit über das Vorhandensein und/oder Fehlen der mindestens einen Anomalie in dem jeweiligen räumlich-zeitlichen Datensatz annotiert ist, wobei das verstärkende Lernen des neuronalen Netzes auf der Grundlage einer fünften Funktion erfolgt, die für alle räumlich-zeitliche Daten des zweiten räumlich-zeitlichen Datensatzes eine Differenz bestraft, zwischen der vom neuronalen Netz generierten Ortsangabe der mindestens einen Anomalie für jeden dieser räumlich-zeitlichen Datenpunkte und der Grundwahrheit jedes dieser räumlich-zeitlichen Datenpunkte,
- Erzeugung (220) von Teilmengen räumlich-zeitlicher Daten aus dem zweiten Satz räumlich-zeitlicher Daten, wobei jede Teilmenge räumlich-zeitlicher Daten mindestens einen räumlich-zeitlichen Datensatz mit mindestens einer Anomalie und mindestens einen räumlich-zeitlichen Datensatz ohne Anomalie umfasst, und
- Ähnlichkeitsbasiertes Lernen (230) des neuronalen Netzes für jeden räumlich-zeitlichen Datenpunkt jeder Teilmenge räumlich-zeitlicher Daten, wobei das ähnlichkeitsbasierte Lernen des neuronalen Netzes anhand einer sechsten Funktion erfolgt, die eine paarweise Nebenbedingung zwischen dem jeweiligen räumlich-zeitlichen Datensatz und mindestens einem anderen räumlich-zeitlichen Datensatz der jeweiligen Teilmenge der räumlich-zeitlichen Datensätze bestraft.

6. Verfahren nach einem der Ansprüche 1 bis 4, bei dem das Erhalten (140) des neuronalen Netzes ein anfängliches Training (200) des neuronalen Netzes gemäß Anspruch 5 umfasst.

7. Verfahren nach einem der vorstehenden Ansprüche, bei dem die räumlich-zeitlichen Daten Folgendes sind:
- ein Video und/oder
- eine Tonaufzeichnung und/oder
- Daten, die aus einer Messung einer Kraft und/oder einer Schwingung und/oder einer Temperatur und/oder eines Drucks und/oder einer Helligkeit stammen.

8. Computerprogrammprodukt, das Anweisungen umfasst, die, wenn das Programm von einem Computer ausgeführt wird, diesen veranlassen, das Verfahren gemäß einem der Ansprüche 1 bis 7 durchzuführen.

9. Computerlesbares Aufzeichnungsmedium, das Befehle enthält, die, wenn sie von einem Computer ausgeführt werden, diesen veranlassen, das Verfahren gemäß einem der Ansprüche 1 bis 7 durchzuführen.

10. System, das Mittel umfasst, die dazu ausgelegt sind, das Verfahren gemäß einem der Ansprüche 1 bis 7 auszuführen.

## Claims

1. A computer-implemented method (100) for locating at least one anomaly in a spatio-temporal piece of data, the method comprising the steps of:
- Obtaining (130) a spatio-temporal piece of data,
- Obtaining (140) a neural network configured to generate a piece of information of locating at least one anomaly from a spatio-temporal piece of data,
- Generating (150), by the neural network obtained, the piece of information of locating the at least one anomaly by providing the spatio-temporal piece of data obtained to the neural network,
- Obtaining (160) an accuracy score provided by a user evaluating an accuracy of the generated piece of information of locating the at least one anomaly,
- reinforcement learning (170) the neural network, from the generated piece of information of locating the at least one anomaly and from the accuracy score, reinforcement learning being performed from a first function penalising a low value of the accuracy score,
**characterized in that** the method further comprises the step of:
- similarity learning (180) the neural network reinforcement learned (170), from a first set of spatio-temporal data comprising the spatio-temporal piece of data obtained (130), similarity learning being performed from a second function to be minimised, the second function corresponding to a pairwise constraint between the spatio-temporal piece of data obtained and at least one other spatio-temporal piece of data of the first set of spatio-temporal data, the first set of spatio-temporal data comprising, for each spatio-temporal piece of data of the first set of spatio-temporal data, a ground truth piece of locating the at least one anomaly obtained from the generated piece of information of locating the at least one anomaly in the spatio-temporal piece of data and from the accuracy score.

2. The method according to claim 1, wherein reinforcement learning (170) the neural network comprises a Markov decision process based reinforcement learning sub-phase (171) and a multi armed bandit reinforcement learning based multi-instance learning (172).

3. The method according to claim 2, wherein the Markov decision process based reinforcement learning sub-phase (171) is performed from a third function reinforcing anticipated location of the at least one anomaly in the spatio-temporal piece of data.

4. The method according to claim 2 or 3, wherein the multi armed bandit reinforcement learning based multi-instance learning (172) is performed from a fourth function reinforcing multiple location of the at least one anomaly in the spatio-temporal piece of data.

5. A method (200) for initially learning a neural network taking as an input a spatio-temporal piece of data and providing as an output a piece of information of locating at least one anomaly in said spatio-temporal piece of data, the method (200) comprising steps of:
- Reinforcement learning (210) the neural network, from a second set of weakly annotated spatio-temporal data, each spatio-temporal piece of data of the second set of spatio-temporal data being annotated with a ground truth piece of information of the presence and/or absence of the at least one anomaly in said each spatio-temporal piece of data, reinforcement learning the neural network being performed from a fifth function penalising a difference, for each spatio-temporal piece of data of the second set of spatio-temporal data, between the generated piece of information of locating the at least one anomaly for said each spatio-temporal piece of data generated by the neural network and the a ground truth piece of information of said each spatio-temporal piece of data,
- generating (220), from the second set of spatio-temporal data, sub-sets of spatio-temporal data, each sub-set of spatio-temporal data comprising at least one spatio-temporal piece of data with at least one anomaly and at least one spatio-temporal piece of data with no anomaly, and
- similarity learning (230) the neural network, for each spatio-temporal piece of data of each subset of spatio-temporal data, similarity learning the neural network from a sixth function penalising a pairwise constraint between said each spatio-temporal piece of data and at least one other spatio-temporal piece of data of said each subset of spatio-temporal data.

6. The method according to any of claims 1 to 4, wherein obtaining (140) the neural network comprises initially training (200) the neural network according to claim 5.

7. The method according to any of the preceding claims, wherein the spatio-temporal piece of data is:
- a video, and/or
- a sound, and/or
- a piece of data derived from a measurement of force and/or vibration and/or temperature and/or pressure and/or brightness.

8. A computer program product comprising instructions which, when the program is executed by a computer, cause the same to implement the method according to any of claims 1 to 7.

9. A computer-readable recording medium comprising instructions which, when executed by a computer, cause the same to implement the method according to any of claims 1 to 7.

10. A system comprising means adapted to perform the method according to any of claims 1 to 7.
